# FASCICULE DE BREVET EUROPEEN

(11) **EP 1 336 367 B1**
(45) Date de publication et mention de la délivrance du brevet: **14.05.2008**
(21) Numéro de dépôt: 03290382.5
(22) Date de dépôt: 17.02.2003
(51) Int. Cl.: A47J 43/07, A47J 43/08

(54) **Mixeur plongeant à boîte fouet renforcée**
Küchenmixer mit verstärktem Quirlgehäuse
Food blender with reinforced housing for the beater

(30) Priorité: 18.02.2002 FR 0202026
(43) Date de publication de la demande: 20.08.2003
(73) Titulaire: Robot Coupe SNC, 94300 Vincennes (FR)
(72) Inventeur: Callange, Yves, 71300 Montceau-Les-mines (FR); Celsi, Jérôme, 71300 Montceau-Les-Mines (FR)
(74) Mandataire: Schmit, Christian Norbert Marie

(56) Documents cités:
- EP-A- 1 230 883
- DE-A- 2 835 715
- DE-A- 4 033 020
- DE-B- 1 170 120

## Description

L'invention concerne en général les mixeurs plongeants.

Plus précisément, l'invention concerne un mixeur plongeant comprenant une boîte fouet, un arbre d'entraînement pénétrant dans la boîte fouet à travers une première face de cette boîte, au moins un support de fouet monté fixe en translation mais libre en rotation par rapport à la boîte fouet, et un dispositif d'entraînement transmettant le mouvement de rotation de l'arbre d'entraînement au support de fouet, ce dispositif d'entraînement étant logé dans la boîte fouet.

Les mixeurs de ce type sont connus de l'art antérieur comme décrit dans le document DE 1170120 B. Ils comprennent en général deux supports de fouets et deux fouets, et sont utilisés pour battre, mélanger ou homogénéiser des préparations peu denses, comme par exemple des blancs d'oeufs ou des mousses.

Ces mixeurs ne peuvent pas être utilisés pour homogénéiser des préparations denses comme la pâte à crêpe ou pour broyer des légumes denses comme des pommes de terre pour produire de la purée, car les efforts de réaction sur les fouets sont trop importants. Ces efforts sont transmis à la boîte fouet, constituée d'un matériau plastique rigide, et celle-ci se déforme autour des paliers de guidage en rotation des supports de fouets ou des pignons du dispositif d'entraînement. Ces déformations entraînent des jeux importants entre les pignons du dispositif d'entraînement, qui perturbent la transmission du mouvement aux fouets. Il se produit des a-coups dans la rotation des fouets, quand les pignons n'engrènent plus parfaitement les uns avec les autres. Ces a-coups sont gênants pour l'utilisateur et nuisent à la qualité du résultat. A plus long terme, ces déformations entraînent la fissuration du matériau plastique rigide et une usure prématurée de la boîte fouet.

Par ailleurs, les dispositifs d'entraînement de l'art antérieur présentent le défaut de transmettre les efforts de réaction parallèlement à l'arbre d'entraînement, ce qui peut conduire au déplacement de certains paliers de guidage en rotation du dispositif d'entraînement.

Dans ce contexte, le but de l'invention est de pallier les défauts mentionnés ci-dessus.

A cette fin, l'invention, par ailleurs conforme à la définition générique qu'en donne le préambule ci-dessus, est essentiellement caractérisée en ce que la boîte fouet comprend un insert métallique de renforcement permettant de transmettre au support de fouet des efforts importants sans déformation de la boîte fouet.

Dans un mode de réalisation possible de l'invention, l'insert métallique entoure le dispositif d'entraînement.

Avantageusement, le support de fouet peut être parallèle à l'arbre d'entraînement et pénétrer dans la boîte fouet à travers une deuxième face de cette boîte opposée à la première face, le dispositif d'entraînement comprenant un pignon d'attaque solidaire en rotation de l'arbre d'entraînement et portant une première denture droite, un pignon d'entraînement solidaire du support de fouet et portant une seconde denture droite, la première denture engrenant avec la seconde denture de telle sorte que l'arbre d'entraînement entraîne en rotation le support de fouet.

De préférence, l'insert métallique peut porter au moins un premier palier de guidage en rotation du pignon d'attaque.

Par exemple, la boîte fouet peut comprendre une première demi-coquille portant la première face traversée par l'arbre d'entraînement, et une seconde demi-coquille complémentaire portant la seconde face traversée par le support de fouet, l'insert métallique comprenant un demi-insert supérieur traversé par l'arbre d'entraînement et relativement plus proche de la première face, et un demi-insert inférieur traversé par le support de fouet et relativement plus proche de la seconde face, le demi-insert supérieur étant intégré dans la première demi-coquille de la boîte fouet.

Avantageusement, le demi-insert supérieur peut porter au moins un troisième palier de guidage en rotation d'une extrémité du support de fouet.

De préférence, le demi-insert inférieur peut porter au moins un cinquième palier de guidage en rotation du support de fouet.

Par exemple, le demi insert inférieur peut comprendre un fond sensiblement perpendiculaire au support de fouet, un épaulement se dressant à partir du fond vers la deuxième face et portant le cinquième palier de guidage du support de fouet, et un rebord se dressant autour du fond vers la première face, le demi insert inférieur reposant par l'extrémité libre de ce rebord sur une nervure portée par la première demi-coquille.

Avantageusement, le demi-insert inférieur peut former avec la première demi-coquille un boîtier pour le lubrifiant du dispositif d'entraînement, ce boîtier épousant la forme du dispositif d'entraînement.

De préférence, le demi insert inférieur peut porter des nervures de rigidification.

Par exemple, l'insert métallique peut être en zamak, en aluminium ou en acier.

D'autres caractéristiques et avantages de l'invention ressortiront clairement de la description qui en est donnée ci-dessous, à titre indicatif et nullement limitatif, en référence aux figures annexées, parmi lesquelles :
- la figure 1 est une vue éclatée en perspective de la boîte fouet de l'invention,
- la figure 2 est une vue en coupe suivant les flèches II de la figure 1,
- la figure 3 est une vue en perspective éclatée de la boîte fouet de la figure 1, la demi-coquille inférieure n'étant pas représentée pour plus de clarté, et
- la figure 4 est une vue en coupe suivant les flèches IV de la figure 3.

L'invention concerne un mixeur plongeant comprenant de manière connue un carter (non représenté), un moteur électrique (non représenté), une boîte fouet 10 solidaire du carter, un arbre d'entraînement 20 entraîné en rotation par le moteur électrique et pénétrant dans la boîte fouet 10 à travers une première face 11 de cette boîte, au moins un support de fouet 30 monté fixe en translation mais libre en rotation par rapport à la boîte fouet 10, et un dispositif d'entraînement 40 transmettant le mouvement de rotation de l'arbre d'entraînement 20 au support de fouet 30.

Ce dispositif d'entraînement 40 est logé dans la boîte fouet 10.

Les mixeurs plongeant comprennent généralement deux supports de fouets 30 parallèles. Des fouets, non représentés, sont montés de façon amovibles sur les supports de fouets 30.

Selon l'invention, la boîte fouet 10 comprend un insert métallique 50 de renforcement permettant de transmettre aux supports de fouets 30 des efforts importants sans déformation de la boîte fouet 10.

L'insert métallique 50 entoure le dispositif d'entraînement 40.

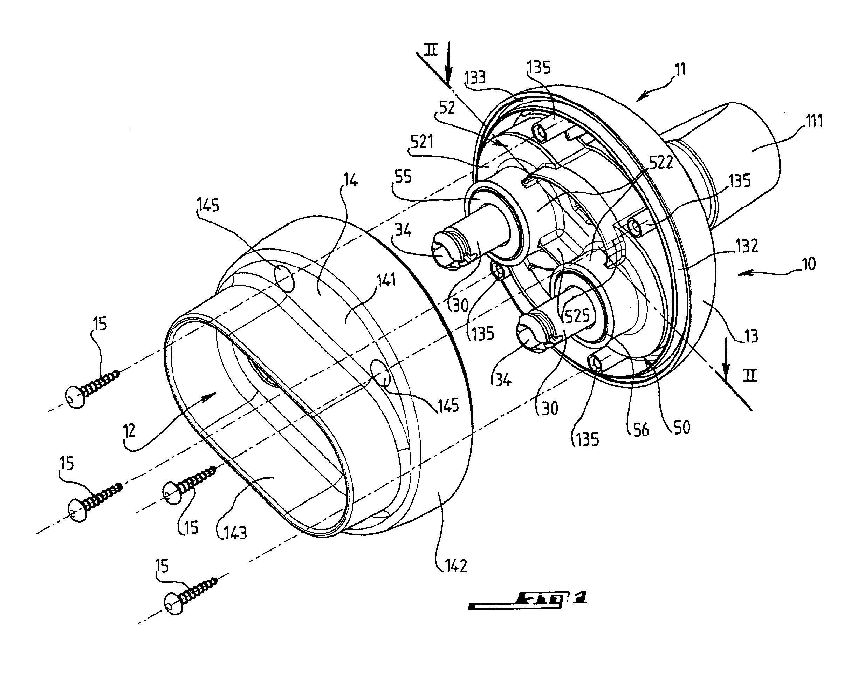

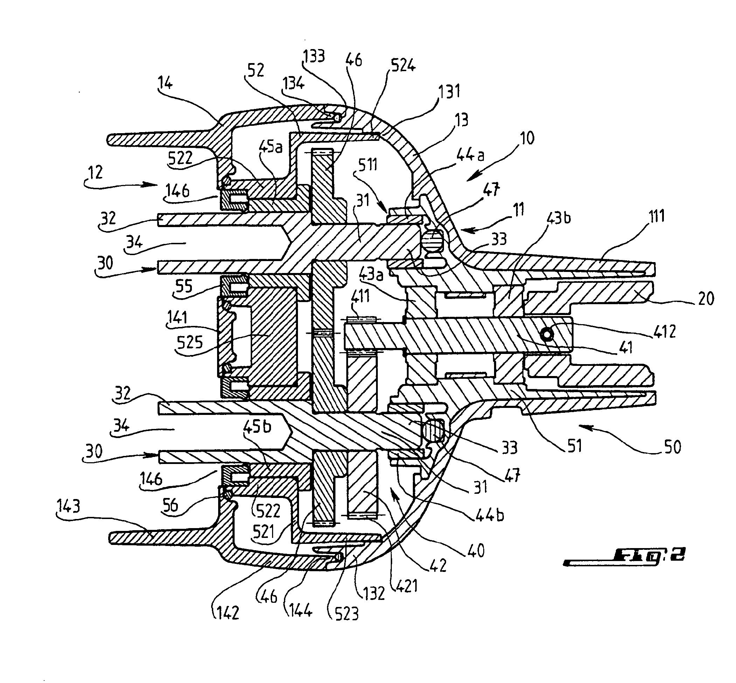

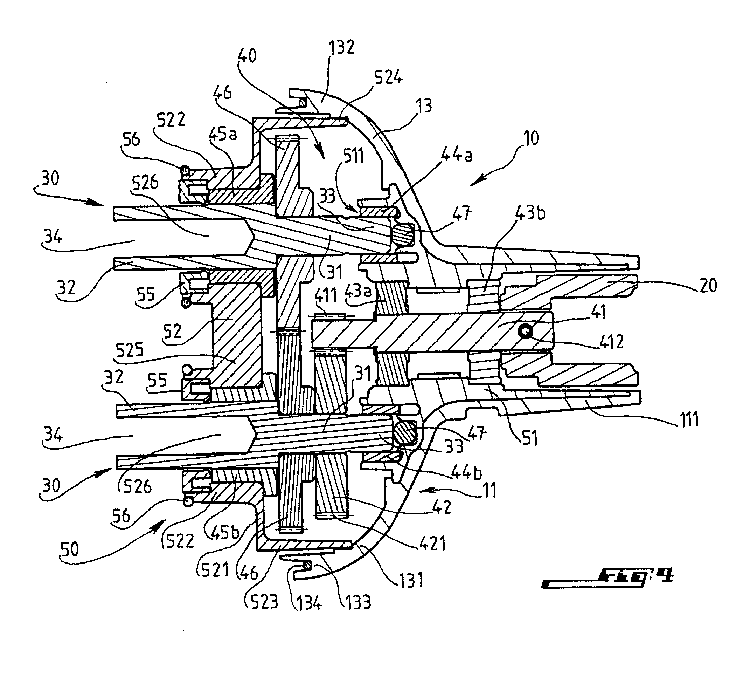

Dans le mode de réalisation représenté sur les figures 1 à 4, les supports de fouets 30 sont parallèles à l'arbre d'entraînement 20 et pénètrent dans la boîte fouet 10 à travers une deuxième face 12 de cette boîte opposée à la première face 11.

Ces supports de fouets 30 présentent chacun une première partie 31 cylindrique de diamètre relativement plus petit, prolongée par une seconde partie 32 cylindrique de diamètre relativement plus grand et coaxiale à la première. La première partie 31 est située à l'intérieur de la boîte fouet 10 et la seconde partie 32 dépasse en saillie de la deuxième face 12. Cette seconde partie 32 comprend un logement 34 dans lequel un fouet peut être fixé.

La première face 11 est bombée vers l'extérieur de la boîte fouet 10 et présente un contour sensiblement ovale quand elle est vue parallèlement à l'arbre d'entraînement 20. Cet arbre 20 pénètre dans la boîte fouet 10 par une cheminée 111 située au sommet de la face bombée 11.

Le dispositif d'entraînement 40 comprend un pignon d'attaque 41, présentant une forme sensiblement cylindrique, solidaire en rotation de l'arbre d'entraînement 20 par une extrémité, et portant à une extrémité opposée une première denture droite 411.

Ce pignon d'attaque 41 est rigidement lié à l'arbre d'entraînement par exemple par l'intermédiaire d'une cheville 412.

Le dispositif d'entraînement 40 comprend également un pignon d'entraînement 42 solidaire d'un des deux supports de fouets 30, présentant une forme de disque, et portant une seconde denture droite 421 radiale. Le pignon d'entraînement 42 est montée de façon coaxiale sur la première partie cylindrique 31 du support de fouet 30.

La première denture 411 engrène avec la seconde denture 421 de telle sorte que l'arbre d'entraînement 20 entraîne en rotation le support de fouet 30 portant le pignon d'entraînement 42.

L'autre support de fouet 30 est entraîné par deux pignons intermédiaires 46 identiques, chacun solidaire d'un des supports de fouet 30, et engrenant l'un avec l'autre. Ces pignons intermédiaires 46 sont montés de façon coaxiale sur les premières parties cylindriques 31 des deux supports de fouets 30. Ainsi, la rotation du support de fouet 30 portant le pignon d'entraînement 42 provoque la rotation en sens inverse de l'autre support de fouet 30.

La boîte fouet 10 comprend une première demi-coquille 13 portant la première face 11 traversée par l'arbre d'entraînement 20, et une seconde demi-coquille complémentaire 14 portant la seconde face 12 traversée par le support de fouet 30.

La seconde demi-coquille 14 comprend un fond 141 constituant la seconde face 12, un rebord 142 se dressant autour du fond 141 en direction de la première demi-coquille 13, et une jupe de protection 143 à contour fermée se dressant à partir du fond 141 autour des deux supports de fouets 30 faisant saillie par rapport à la seconde face 12. La seconde demi-coquille 14 est par exemple réalisée en aluminium. Elle présente, vue suivant la direction de l'arbre d'entraînement 20, la même forme ovale que la première demi-coquille 13. Le fond 141 présente deux trous 146 traversés par les supports de fouets 30.

La première demi-coquille 13 forme la première face 11 et sa cheminée 111. Elle est par exemple réalisée en une matière plastique rigide. Cette première demi-coquille 13 présente un rebord libre 132 tourné vers la seconde demi-coquille 12 présentant une gorge 133 formant mortaise.

L'extrémité libre du rebord 142 de la seconde demi-coquille 14 présente une nervure 144 formant tenon engagée dans la gorge 132. Un joint d'étanchéité 134 est disposé en fond de gorge 133.

Les première et seconde demi-coquilles 13 et 14 sont maintenues à l'état assemblé par des vis 15 traversant des orifices 145 de la seconde demi-coquille 14 et engagées dans des trous filetés 135 de la première demi-coquille 13.

L'insert métallique comprend un demi-insert supérieur 51 traversé par l'arbre d'entraînement 20 et relativement plus proche de la première face 11, et un demi-insert inférieur 52 traversé par les supports de fouets 30 et relativement plus proche de la seconde face 12.

Le demi-insert supérieur 51 comprend une partie sensiblement cylindrique coaxiale à l'arbre d'entraînement 20, s'évasant à une extrémité pour former une face 511 sensiblement perpendiculaire à cet arbre 20.

Dans un mode de réalisation préféré de l'invention, la partie centrale de la première demi-coquille 13 de la boîte fouet 10 est surmoulée sur le demi-insert supérieur 51, la cheminée 111 entourant la partie cylindrique du demi-insert supérieur 51 de façon à maintenir le demi-insert en position et à rigidifier la demi-coquille. Dans un autre mode de réalisation possible de l'invention, la première demi-coquille 13 peut ne pas être surmoulée sur le demi-insert supérieur 51.

Une extrémité de l'arbre d'entraînement 20 est engagée dans l'extrémité non évasée du demi-insert supérieur 51.

Le pignon d'attaque 41 est engagé dans la partie cylindrique du demi-insert supérieur 51, et est guidé en rotation par des premier et second paliers de guidage 43a et 43b solidaires du demi-insert supérieur 51 et logés dans cette partie cylindrique.

Le demi-insert supérieur 51 porte également des troisième et quatrième paliers 44a et 44b de guidage en rotation d'extrémités 33 des premières parties cylindriques 31 des supports de fouets 30, ces troisième et quatrième paliers 44a et 44b étant situés dans des logements venus de matière avec le demi-insert supérieur 51. Ces logements contiennent également des billes 47 de butée et de guidage en rotation des extrémités 33 des supports de fouets 30.

Le demi-insert inférieur 52 porte des cinquième et sixième paliers 45a et 45b de guidage en rotation des secondes parties cylindriques 32 des supports de fouets 30.

Le demi-insert inférieur 52 comprend un fond 521 sensiblement perpendiculaire aux supports de fouets 30, deux épaulements 522 se dressant à partir du fond 521 vers la deuxième face 12 et portant les cinquième et sixième paliers 45a et 45b de guidage des supports de fouets 30, et un rebord 523 se dressant autour du fond 521 vers la première face 11.

Les épaulements 522 sont sensiblement cylindriques et percés chacun d'un orifice 526 cylindrique dans lequel est engagée la seconde partie cylindrique 32 d'un des deux supports de fouets 30.

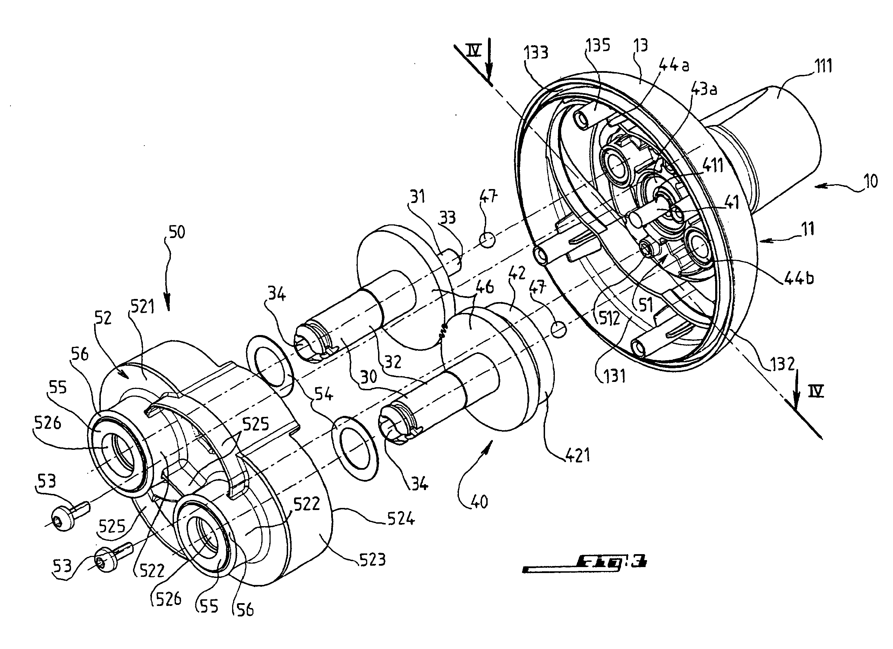

Des nervures 525 rigidifient le demi-insert inférieur 52. Elles s'étendent par exemple entre les deux épaulements 522, comme le montre la figure 3.

Le demi insert inférieur 52 repose par une extrémité libre 524 du rebord 523 sur une nervure 131 portée par la première demi-coquille 13.

Les demi-inserts supérieur et inférieur 51 et 52 sont maintenus à l'état assemblé par des vis 53 traversant des trous non représentés portés par le demi-insert inférieur 52 et engagés dans des orifices filetés 512 du demi-insert supérieur 51.

Des rondelles d'usures 54 sont interposées entre les pignons intermédiaires 46 et les cinquième et sixième paliers 45a et 45b de guidage en rotation des supports de fouets 30.

Les orifices cylindriques 526 s'évasent légèrement au niveau des extrémités libres des épaulements 522, formant ainsi des portées recevant des joints à lèvres circulaires 55. Ces joints à lèvres 55 assurent l'étanchéité entre les supports de fouets 30 et les épaulements 522 et servent à rattraper les tolérances de fabrication.

Par ailleurs, des joints toriques 56 disposés à la périphérie extérieure des extrémités libres des épaulements 522 assurent l'étanchéité entre ces épaulements et les bords périphériques des trous 146 percés dans le fond 141 de la seconde demi-coquille 14.

Un dispositif de positionnement, connu en lui-même et non représenté, permet de positionner les deux demi-inserts inférieurs et supérieurs 52 et 51, l'un par rapport à l'autre. Il comprend des ergots portés par le demi-insert inférieur 52, s'engageant dans des reliefs en creux complémentaires ménagés dans le demi-insert supérieur 51. La forme des reliefs autorise le déplacement des ergots dans une direction donnée, de façon à rattraper les tolérances de fabrication.

Enfin, l'insert métallique 50 est de préférence réalisé dans un alliage d'aluminium et de zinc connu sous le nom de zamak, qui présente l'avantage d'être particulièrement léger tout en possédant de bonnes caractéristiques mécaniques. L'insert métallique 10 peut également être réalisé dans d'autres métaux, comme par exemple en aluminium ou en acier.

On peut encore souligner que le demi-insert inférieur 52 forme avec la première demi-coquille 13 un boîtier pour le lubrifiant du dispositif d'entraînement 40. Dans un plan perpendiculaire à l'arbre d'entraînement 20, le demi-insert inférieur 52 présente une forme qui épouse au plus près la forme des pignons intermédiaires 46. Cette caractéristique avantageuse permet de réduire la quantité de lubrifiant nécessaire à la lubrification du dispositif d'entraînement 40 et d'assurer un meilleur contact entre le lubrifiant et les pignons.

On conçoit donc bien que le mixeur plongeant de l'invention présente une boîte fouet de structure renforcée par la présence de l'insert métallique. Les paliers de guidage en rotation sont tous portés par l'insert, qui présente une bonne résistance mécanique. Comme ce sont plus spécialement les parties supportant ces paliers qui subissent les contraintes venant des efforts de réaction des légumes sur les fouets, la tenue mécanique de l'ensemble du boîtier en est grandement améliorée par comparaison avec un boîtier purement plastique.

Par ailleurs les dentures des pignons, et en particulier du pignon d'attaque et du pignon d'entraînement sont droites, aucun effort de réaction n'étant en conséquence transmis parallèlement à l'arbre d'entraînement. Il n'y a donc pas de risque que les premier et second paliers de guidage en rotation soient entraînés en translation.

## Revendications

1. Mixeur plongeant comprenant une boîte fouet (10), un arbre d'entraînement (20) pénétrant dans la boîte fouet (10) à travers une première face (11) de cette boîte, au moins un support de fouet (30) monté fixe en translation mais libre en rotation par rapport à la boîte fouet (10), et un dispositif d'entraînement (40) transmettant le mouvement de rotation de l'arbre d'entraînement (20) au support de fouet (30), ce dispositif d'entraînement (40) étant logé dans la boîte fouet (10), **caractérisé en ce que** la boîte fouet (10) comprend un insert métallique de renforcement (50) permettant de transmettre au support de fouet (30) des efforts importants sans déformation de la boîte fouet (10).

2. Mixeur plongeant suivant la revendication 1, **caractérisé en ce que** l'insert métallique (50) entoure le dispositif d'entraînement (40).

3. Mixeur plongeant suivant la revendication 1 ou 2, **caractérisé en ce qu**e le support de fouet (30) est parallèle à l'arbre d'entraînement (20) et pénètre dans la boîte fouet (10) à travers une deuxième face (12) de cette boîte opposée à la première face (11), le dispositif d'entraînement (40) comprenant un pignon d'attaque (41) solidaire en rotation de l'arbre d'entraînement (20) et portant une première denture (411) droite, un pignon d'entraînement (42) solidaire du support de fouet (30) et portant une seconde denture (421) droite, la première denture (411) engrenant avec la seconde denture (421) de telle sorte que l'arbre d'entraînement (20) entraîne en rotation le support de fouet (30).

4. Mixeur plongeant suivant la revendication 3, **caractérisé en ce que** l'insert métallique (50) porte au moins un premier palier (43a) de guidage en rotation du pignon d'attaque (41).

5. Mixeur plongeant suivant la revendication 3 ou 4, **caractérisé en ce que** la boîte fouet (10) comprend une première demi-coquille (13) formant la première face (11) traversée par l'arbre d'entraînement (20), et une seconde demi-coquille (14) complémentaire formant la seconde face (12) traversée par le support de fouet (30), l'insert métallique (50) comprenant un demi-insert supérieur (51) traversé par l'arbre d'entraînement (20) et relativement plus proche de la première face (11), et un demi-insert inférieur (52) traversé par le support de fouet (30) et relativement plus proche de la seconde face (12), le demi-insert supérieur (51) étant intégré dans la première demi-coquille (13) de la boîte fouet (10).

6. Mixeur plongeant suivant la revendication 5, **caractérisé en ce que** le demi-insert supérieur (51) porte au moins un troisième palier (44a) de guidage en rotation d'une extrémité (33) du support de fouet (30).

7. Mixeur plongeant suivant la revendication 5 ou 6, **caractérisé en ce que** le demi-insert inférieur (52) porte au moins un cinquième palier (45a) de guidage en rotation du support de fouet (30).

8. Mixeur plongeant suivant la revendication 6 ou 7, **caractérisé en ce que** le demi insert inférieur (52) comprend un fond (521) sensiblement perpendiculaire au support de fouet (30), un épaulement (522) se dressant à partir du fond (521) vers la deuxième face (12) et portant le cinquième palier (45a) de guidage du support de fouet (30), et un rebord (523) se dressant autour du fond (521) vers la première face (11), le demi insert inférieur (52) reposant par l'extrémité libre (524) de ce rebord (523) sur une nervure (131) portée par la première demi-coquille (13).

9. Mixeur plongeant suivant la revendication 8, **caractérisé en ce que** le demi-insert inférieur (52) forme avec la première demi-coquille (13) un boîtier pour le lubrifiant du dispositif d'entraînement (40), ce boîtier épousant la forme du dispositif d'entraînement (40).

10. Mixer plongeant suivant l'une quelconque des revendications 5 à 9, **caractérisé en ce que** le demi insert inférieur (52) porte des nervures de rigidification (525).

11. Mixeur plongeant suivant l'une quelconque des revendications précédentes, **caractérisé en ce que** l'insert métallique (50) est en zamak, en aluminium ou en acier.

## Claims

1. A handheld mixer comprising a whisk gear box (10), a drive shaft (20) penetrating the whisk gear box (10) through a first face (11) of this box, at least one whisk sleeve (30) mounted fixed in translation but free in rotation in relation to the whisk gear box (10), and a driving device (40) transmitting the spinning movement of the drive shaft (20) to the whisk sleeve (30), this driving device (40) being lodged in the whisk gear box (10), **characterized in that** the whisk gear box (10) comprises a reinforcing metallic insert (50) permitting the transmission of considerable stresses to the whisk sleeve (30) without deforming the whisk gear box (10).

2. A handheld mixer according to claim 1, **characterized in that** the metallic insert (50) surrounds the driving device (40).

3. A handheld mixer according to claim 1 or 2, **characterized in that** the whisk sleeve (30) is parallel to the drive shaft (20) and penetrates the whisk gear box (10) through a second face (12) of this box opposite the first face (11), the driving device (40) comprising a primary pinion (41) connected in rotation to the drive shaft (20) and carrying a first spur (411) gear, a drive pinion (42) connected to the whisk sleeve (30) and carrying a second spur (421) gear, the first spur (411) meshing with the second spur (421) in such a way that the drive shaft (20) spins the whisk sleeve (30).

4. A handheld mixer following claim 3, **characterized in that** the metallic insert (50) carries at least a first rotation guide bearing (43a) of the primary pinion (41).

5. A handheld mixer according to claim 3 or 4, **characterized in that** the whisk gear box (10) comprises a first half-shell (13) forming the first face (11) transpierced by the drive shaft (20), and a second complementary half-shell (14) forming the second face (12) transpierced by the whisk sleeve (30), the metallic insert (50) comprising an upper half-insert (51) transpierced by the drive shaft (20) and relatively closer to the first face (11), and a lower half-insert (52) transpierced by the whisk sleeve (30) and relatively closer to the second face (12), the upper half-insert (51) being integral to the first half-shell (13) of the whisk gear box (10).

6. A handheld mixer following claim 5, **characterized in that** the upper half-insert (51) carries at least a third rotation guide bearing (44a) of an edge (33) of the whisk sleeve (30).

7. A handheld mixer following claim 5 or 6, **characterized in that** the lower half-insert (52) carries at least a fifth rotation guide bearing (45a) of the whisk sleeve (30).

8. A handheld mixer according to claim 6 or 7, **characterized in that** the lower half-insert (52) comprises a bottom (521) noticeably perpendicular to the whisk sleeve (30), a shouldering (522) going from the bottom (521) towards the second face (12) and carrying the fifth guide bearing (45a) of the whisk sleeve (30), and a ledge (523) going around the bottom (521) towards the first face (11), the lower half-insert (52) supported by the free edge (524) of this ledge (523) on a ribbing (131) carried by the first half-shell (13).

9. A handheld mixer according to claim 8, **characterized in that** the lower half-insert (52) and the first half-shell (13) together form a receptacle for the lubricant of the driving device (40), this receptacle following the shape of the driving device (40).

10. A handheld mixer following any one of the claims 5 to 9, **characterized in that** the lower half-insert (52) carries rigidifying ribbings (525).

11. A handheld mixer according to any one of the previous claims, **characterized in that** the metallic insert (50) is made of Zamak, aluminium or steel.

## Patentansprüche

1. Tauchmixer mit einem Schlagbesengehäuse (10), einer Antriebswelle (20), die durch eine erste Fläche (11) dieses Gehäuses in das Schlagbesengehäuse (10) eintritt, zumindest einer Schlagbesenhalterung (30), die im Verhältnis zum Schlagbesengehäuse (10) in Vorschubrichtung fest, und in Rotationsrichtung frei montiert ist, und einer Antriebsvorrichtung (40) zur Übertragung der Rotationsbewegung der Antriebswelle (20) auf die Schlagbesenhalterung (30), wobei diese Antriebsvorrichtung (40) in das Schlagbesengehäuse (10) eingesetzt ist, **dadurch gekennzeichnet, dass** das Schlagbesengehäuse (10) einen metallischen Einsatz zur Verstärkung (50) enthält, mit dem hohe Kräfte auf die Schlagbesenhalterung. (30) übertragen werden können, ohne dass sich das Schlagbesengehäuse (10) verformt.

2. Tauchmixer nach Anspruch 1, **dadurch gekennzeichnet, dass** der metallische Einsatz (50) die Antriebsvorrichtung (40) umgibt.

3. Tauchmixer nach Anspruch 1 oder 2, **dadurch gekennzeichnet, dass** die Schlagbesenhalterung (30) parallel zur Antriebswelle (20) steht, und durch eine zweite Fläche (12) dieses Gehäuses, die gegenüber der ersten Fläche (11) liegt, in das Schlagbesengehäuse (10) eintritt, wobei die Antriebsvorrichtung (40) ein Eingriffsritzel (41) enthält, das sich gemeinsam mit der Antriebswelle (20) dreht, und eine erste gerade Verzahnung (411) aufweist, ein Antriebsritzel (42), das mit der Schlagbesenhalterung (30) verbunden ist, und eine zweite gerade Verzahnung (421) aufweist, wobei die erste Verzahnung (411) so in die zweite Verzahnung (421) eingreift, dass die Antriebswelle (20) die Schlagbesenhalterung (30) zum Drehen bringt.

4. Tauchmixer nach Anspruch 3, **dadurch gekennzeichnet, dass** der metallische Einsatz (50) zumindest ein erstes Lager (43a) zur Rotationsführung des Eingriffsritzels (41) trägt.

5. Tauchmixer nach Anspruch 3 oder 4, **dadurch gekennzeichnet, dass** das Schlagbesengehäuse (10) eine erste Halbschale (13) enthält, die die erste Fläche (11) bildet, durch die die Antriebswelle (20) führt, .und eine zweite ergänzende Halbschale (14), die die zweite Fläche (12) bildet, durch die die Schlagbesenhalterung (30) führt, wobei der metallische Einsatz (50) einen oberen Halbeinsatz (51) enthält, durch den die Antriebswelle (20) führt, und der relativ näher an der ersten Fläche (11) liegt, und einen unteren Halbeinsatz (52), durch den die Schlagbesenhalterung (30) führt, und der relativ näher an der zweiten Fläche (12) liegt, wobei der obere Halbeinsatz (51) in die erste Halbschale (13) des Schlagbesengehäuses integriert ist.

6. Tauchmixer nach Anspruch 5, **dadurch gekennzeichnet, dass** der obere Halbeinsatz (51) zumindest ein drittes Lager (44a) zur Drehführung eines Endes (33) der Schlagbesenhalterung (30) enthält.

7. Tauchmixer nach Anspruch 5 oder 6, **dadurch gekennzeichnet, dass** der untere Halbeinsatz (52) zumindest ein fünftes Lager (45a) zur Drehführung der Schlagbesenhalterung (30) enthält.

8. Tauchmixer nach Anspruch 6 oder 7, **dadurch gekennzeichnet, dass** der untere Halbeinsatz (52) einen Boden (521) enthält, der merklich normal zur Schlagbesenhalterung (30) steht, ein Ansatzstück (522), das sich vom Boden (521) an zur zweiten Fläche (12) erstreckt, und das fünfte Drehführungslager (45a) der Schlagbesenhalterung (30) trägt, und einen Rand (523), der sich rund um den Boden (521) zur ersten Fläche (11) erstreckt, wobei der untere Halbeinsatz (52) mit dem freien Ende (524) dieses Randes (523) auf einer Rippe (131) aufliegt, die von der zweiten Halbschale (13) getragen wird.

9. Tauchmixer nach Anspruch 8, **dadurch gekennzeichnet, dass** der untere Halbeinsatz (52) mit der ersten Halbschale (13) ein Gehäuse für das Schmiermittel der Antriebsvorrichtung (40) bildet, wobei dieses Gehäuse der Form der Antriebsvorrichtung (40) folgt.

10. Tauchmixer nach irgendeinem der Ansprüche 5 bis 9, **dadurch gekennzeichnet, dass** der untere Halbeinsatz (52) Rippen zur Verstrebung (525) enthält.

11. Tauchmixer nach irgendeinem der zuvor genannten Ansprüche, **dadurch gekennzeichnet, dass** der metallische Einsatz (50) aus Zamak, aus Aluminium oder aus Stahl gefertigt ist.
